# EUROPEAN PATENT SPECIFICATION

(11) **EP 3 830 173 B1**
(45) Date of publication and mention of the grant of the patent: **20.11.2024**
(21) Application number: 19756060.0
(22) Date of filing: 30.07.2019
(51) Int. Cl.: C08J 7/04, C08J 7/056, B32B 27/12, B32B 27/32, B32B 7/14, B32B 5/02

(54) **POLYETHYLENE FILM**
POLYETHYLENFILM
FILM DE POLYÉTHYLÈNE

(30) Priority: 31.07.2018 US 201862712251 P
(43) Date of publication of application: 09.06.2021
(60) Divisional application: 24205799.0
(73) Proprietor: W. L. Gore & Associates, Inc., Newark, DE 19711 (US)
(72) Inventor: BELL, Brent, Newark, DE 19711 (US); LEONE, Shaun, Newark, DE 19711 (US); SBRIGLIA, Guy, Newark, DE 19711 (US)
(74) Representative: HGF
(86) International application number: PCT/US2019/044086
(87) International publication number: WO 2020/028331

(56) References cited:
- EP-A2- 0 184 392
- EP-A2- 0 463 835

## Description

### TECHNICAL FIELD OF THE DISCLOSURE

The present disclosure relates to waterproof, breathable polyethylene film composites that are useful in a variety of applications. The films can be used by themselves or can be laminated to other layers to form multilayer laminates.

### BACKGROUND OF THE DISCLOSURE

Garments and other types of apparel, such as shoes, gloves and hats often incorporate a waterproof breathable layer to keep a wearer dry in wet conditions. These garments can be formed using laminates of the breathable waterproof layer and one or more textiles. Waterproof breathable films made using porous PTFE membranes and hydrophilic polyurethane are currently being used to make GORE-TEX^{®} textile laminates. The PTFE membranes are microporous and generally hydrophobic wherein the pore size of the membrane is larger than molecules of water, but the pores are much smaller than individual drops of water. Water vapor is able to pass through the material while water droplets are prevented from passing from one side of the membrane to the other.

EP 0 184 392 A2 is directed to a waterproof, moisture-vapor permeable unitary sheet material comprising a microporous polymeric matrix having pores comprising continous passages extending through its thickness and opening into the opposite surfaces thereof, the passages being sufficiently filled with a moisture-vapor permeable, water-impermeable, hydrophilic material to prevent the passage of water and other liquids through the unitary sheet material while readily permitting moisture vapor transmission therethrough rendering the sheet material breathable. The unitary sheet is made by causing a liquid composition comprising the hydrophilic material or precursor thereof to flow into the pores of the matrix, then causing the conversion thereof to solid hydrophilic material.

While ePTFE membranes work well, porous polyurethane membranes have also been developed for use in apparel, but these membranes can lack durability and, in some cases, can be dissolved by certain commonly used products, for example, nail polish or bug sprays. These membranes can also have limitations where the membrane is stiff and noisy when the wearer moves. There is a continuing need to produce membranes that have excellent waterproofness and breathability as well as having good hand and low noise when an article, such as a garment comprising the membrane is moved or flexed.

### SUMMARY OF THE DISCLOSURE

In a first embodiment, the present disclosure relates to a film comprising: A) a porous polyethylene membrane comprising: a) greater than or equal to 30% by weight of the porous polyethylene has a weight average molecular weight greater than 0.5x10⁶ g/mol, wherein the percentage by weight is based on the total weight of the porous polyethylene; b) a porosity of at least 40%;c) a Gurley number of less than 200 seconds; and B) a hydrophilic polymer filing at least a portion of the pores of the porous
polyethylene; wherein the film comprises: i) an MVTR of greater than or equal to 2500 g/m²/day; ii) a weight of less than 30 grams/meter²; optionally iii) Gurley of greater than or equal to 1000 seconds.

In a second embodiment, the disclosure relates to the film of embodiment 1 wherein the ratio of matrix tensile strengths of the film in two orthogonal directions is in the range 0.5 to 2.0.

In a third embodiment, the disclosure relates to the film of embodiment 1 or 2 wherein substantially all of the pores in the porous polyethylene membrane are filled with the hydrophilic polymer.

In a fourth embodiment, the disclosure relates to the film of any one of embodiments 1 to 3 wherein the hydrophilic polymer is a polyurethane, polyamide, polyester, ionomer, or a copolymer or a copolymer or a combination thereof.

In a fifth embodiment, the disclosure relates to the film of any one of embodiments 1 to 4 wherein the porous polyethylene membrane comprises a weight of less than 10 grams/meter².

In a sixth embodiment, the disclosure relates to the film of any one of embodiments 1 to 5 wherein the porous polyethylene membrane comprises a porosity of at least 60%.

In a seventh embodiment, the disclosure relates to the film of any one of embodiments 1 to 6 wherein the porous polyethylene membrane comprises a Gurley number that is less than or equal to 60 seconds.

In an eighth embodiment, the disclosure relates to the film of any one of embodiments 1 to 7 wherein the ratio of matrix tensile strengths of the film in two orthogonal directions is in the range 0.7 to 1.4.

In a ninth embodiment, the disclosure relates to the film of any one of embodiments 1 to 8 wherein the polyethylene membrane has a first side and a second side and the hydrophilic polymer is applied to the first side of the polyethylene membrane resulting in filling at least a portion of the pores and a cap of hydrophilic polymer on the first side of the polyethylene membrane.

In a tenth embodiment, the disclosure relates to the film of any one of embodiments 1 to 9 wherein the weight ratio of hydrophilic polymer to porous polyethylene is in the range of from 30 to 0.5.

The disclosure also relate to an article comprising the film of any one of embodiments 1 to 10.

In a twelfth embodiment, the disclosure relates to the article of embodiment 11 wherein the article is a multilayer laminate comprising at least one other layer that is laminated to the film.

In a thirteenth embodiment, the disclosure relates to the article of any one of embodiments 11 or 12 wherein the at least one other layer is a textile layer, a polymer film layer, a natural leather layer, a synthetic leather layer, a fleece layer or a combination thereof.

In a fourteenth embodiment, the disclosure relates to the article of any one of embodiments 11 to 13 wherein the at least one other layer is a textile layer.

In a fifteenth embodiment, the disclosure relates to the article of any one of embodiments 11 to 14 wherein the layers of the laminate are adhered to one another using a continuous or a discontinuous adhesive.

In a sixteenth embodiment, the disclosure relates to the article of anyone of embodiments 11 to 15 wherein the adhesive is a thermoplastic or a crosslinkable adhesive.

In a seventeenth embodiment, the disclosure relates to the article of any one of embodiments 11 to 16 wherein the article is a garment.

In an eighteenth embodiment, the disclosure relates to the article of embodiment 17 wherein the garment is a jacket, a coat, a shirt, pants, a glove, a hat, a shoe, coveralls or at least a portion thereof.

In a nineteenth embodiment, the disclosure relates to the article of any one of embodiments 17 or 18 wherein the film is on the exterior of the garment or the film is not on the exterior of the garment.

In a twentieth embodiment, the disclosure relates to the article of any one of embodiments 17 to 19 wherein the garment is waterproof.

The disclosure also relates to an article comprising the film.

### DETAILED DESCRIPTION

As used herein, the term "embodiment" or "disclosure" is not meant to be limiting, but applies generally to any of the embodiments defined in the claims or described herein. These terms are used interchangeably herein.

Unless otherwise disclosed, the terms "a" and "an" as used herein are intended to encompass one or more (i.e., at least one) of a referenced feature.

The features and advantages of the present disclosure will be more readily understood by those of ordinary skill in the art from reading the following detailed description. It is to be appreciated that certain features of the disclosure, which are, for clarity, described above and below in the context of separate embodiments, may also be provided in combination in a single embodiment. Conversely, various features of the disclosure that are, for brevity, described as a combination in the context of a single embodiment, may also be provided separately or in any sub-combination. In addition, references to the singular may also include the plural (for example, "a" and "an" may refer to one or more) unless the context specifically states otherwise.

The use of numerical values in the various ranges specified in this application, unless expressly indicated otherwise, are stated as approximations as though the minimum and maximum values within the stated ranges were both preceded by the word "about". In this manner, slight variations above and below the stated ranges can be used to achieve substantially the same results as values within the ranges. Also, the disclosure of these ranges is intended as a continuous range including each and every value between the minimum and maximum values.

As used herein, the term "membrane" means a polymer in the form of an essentially two dimensional sheet, wherein the length and the width are both much greater than the thickness, for example both the length and the width are at least 100 times the thickness. In some embodiments, the membrane is a microporous membrane having a structure that allows, for example, water vapor to pass through the thickness of the membrane without liquid water being able to penetrate from one side of the membrane to the other. On average, the pore size is on the order of several nanometers to approximately one micrometer.

The term "film" means a membrane wherein the pores have been at least partially filled with a polymer such that the flow of gases or liquids does not occur through open pore channels in the membrane. In some embodiments, the polymer at least partially filling the pores can be a hydrophilic polymer.

The term "hydrophilic polymer" refers to a polymer that can allow substantial amounts of water to be transferred through the film by absorbing water on one side of the film where the water concentration is higher, and desorbing or evaporating it on the opposite side of the film where the water vapor concentration is lower. In some embodiments, a layer of the hydrophilic polymer that is 10 micrometers thick can have a moisture vapor transmission rate of greater than or equal to 5,000 g/meter²/day, or greater than or equal to 10,000 g/meter²/day.

The phrases "porous polyethylene membrane" and "polyethylene membrane" are used interchangeably throughout the specification. Unless specifically stated otherwise, both phrases mean a porous polyethylene membrane having a) greater than or equal to 30% by weight of the porous polyethylene has a weight average molecular weight greater than 0.5×10⁶ g/mol; b) a porosity of at least 40%; and c) a Gurley number of less than 200 seconds or, less than 100 seconds. Under magnification, the porous polyethylene membrane shows a fibrillated structure of polyethylene fibrils, and with sufficient magnification it is possible to see one or more polyethylene fibrils, optionally three or more of the fibrils can be interconnected by one or more intersections of the three or more fibrils.

As used herein, the term "polyethylene" means a polyethylene polymer having less than 5 percent by weight of one or more comonomers. In some embodiments, the polyethylene is free from any fluorine containing comonomers, and, in still further embodiments, the polyethylene is polyethylene homopolymer.

The present disclosure relates to a film comprising A) a porous polyethylene membrane and B) a hydrophilic polymer wherein the hydrophilic polymer fills at least a portion of the pores of the porous polyethylene membrane. This film will not leak due to contamination by oils, detergents or other contact angle reducing materials and as such it is waterproof. Furthermore, articles comprising the film have greater durability in the field and in the wash than other non-air permeable hydrophilic films that do not include the porous polyethylene membrane as a structural support. The porous polyethylene is a membrane wherein greater than or equal to 30% by weight of the polyethylene has a weight average molecular weight of greater than 0.5×10⁶ grams per mole (g/mol). In some embodiments, the porous polyethylene comprises greater than or equal to 30% by weight of the polyethylene having a weight average molecular weight of greater than 0.75×10⁶ g/mol. In still further embodiments, the porous polyethylene comprises greater than or equal to 30% by weight of the polyethylene having a weight average molecular weight of greater than 1.0×10⁶ g/mol. In still further embodiments, greater than or equal to 40% by weight of the polyethylene has a weight average molecular weight of greater than 0.5×10⁶ grams per mole (g/mol) or greater than or equal to 50% by weight of the polyethylene has a weight average molecular weight of greater than 0.5×10⁶ grams per mole (g/mol). All of the percentages by weight are based on the total weight of the porous polyethylene membrane. In some embodiments, the porous polyethylene has a weight average molecular weight of greater than 750,000 g/mol. In still further embodiments, the porous polyethylene has a weight average molecular weight of greater than 1,000,000 g/mol. In still further embodiments, the polyethylene has a weight average molecular weight of greater than 1,500,000 grams per mole or greater than to 1,750,000 grams per mole. In still further embodiments, the polyethylene has a weight average molecular weight of greater than 2,000,000 grams per mole, 3,000,000 grams per mole, 4,000,000 grams per mole, 5,000,000 grams per mole or greater than 8,000,000 grams per mole.

The polyethylene membrane is a porous polyethylene membrane wherein the membrane has a porosity of at least 40%. In some embodiments, the porosity of the porous polyethylene membrane can be at least 50% or at least 60% or at least 70% or at least 80%. The porosity, φ, of the membrane can be calculated by measuring the mass per unit area of the membrane, MPA, and the thickness of the membrane, t, and using the relationship φ = (1- MPA/(t*ρ))*100, where ρ is the density of the membrane polymer. The porous polyethylene membrane can also have a Gurley of less than 200 seconds or less than 100 seconds or less than or equal to 90 seconds or less than or equal to 80 seconds or less than or equal to 70 seconds or less than or equal to 60 seconds or less than or equal to 50 seconds or less than or equal to 40 seconds or less than 10 seconds.

The porous polyethylene membrane can have a relatively light weight, for example, less than or equal to 10 grams per meter² (gsm). In other embodiments, the porous polyethylene membrane can have a weight of less than or equal to 9 gsm or less than or equal to 8 gsm or less than or equal to 7 gsm or less than or equal to 6 gsm or less than or equal to 5 gsm or less than or equal to 4 gsm or less than or equal to 3 gsm or less than or equal to 2 gsm.

The porous polyethylene membrane can be colored or uncolored. The use of a porous polyethylene membrane can provide a valuable aesthetic quality to the film and articles comprising the film, especially when the porous polyethylene membrane is visible in the article. Any of the known colorization methods can be used. For example, the porous polyethylene membrane can be pigmented throughout the bulk of the membrane via the addition of pigments or dyes during the membrane formation process. In other embodiments, the porous polyethylene membrane can be colorized after formation via known printing and dyeing processes. In still further embodiments, the porous polyethylene membrane can be free from or essentially free from any added color and color can be added at one or more steps during the film formation processes described herein.

The film also comprises B) a hydrophilic polymer that fills at least a portion of the pores of the porous polyethylene membrane. The phrase "filling at least a portion of the pores" means that the hydrophilic polymer is imbibed into the pores of the polyethylene membrane and fills the pores to the point that no airflow (a Gurley number of greater than or equal to 1000 seconds) can be determined through the area of the film containing the hydrophilic polymer. In other words, the hydrophilic polymer is not simply a coating on the walls of the polyethylene membrane that define the pores. While some voids may be present, it is thought that the hydrophilic polymer forms a continuous layer within the area of the porous polyethylene membrane to which the hydrophilic polymer is applied. In other embodiments, the hydrophilic polymer forms a continuous layer free from or essentially free from any voids within the area of the porous polyethylene membrane to which the hydrophilic polymer is applied. In still further embodiments, substantially all of the pores of the porous polyethylene membrane are filled with the hydrophilic polymer.

The polyethylene membrane has a first side and a second side. The hydrophilic polymer can be applied to the first side of the porous polyethylene membrane and the hydrophilic polymer can permeate at least a portion of the pores to form the film, resulting in filling at least a portion of the pores of the polyethylene membrane. The first side of the polyethylene membrane can comprise a cap layer of the hydrophilic polymer on the exterior of the membrane. The cap layer or amount of the hydrophilic polymer on the first side of the porous polyethylene membrane has essentially no upper limit. However if the cap layer is too thick, then the beneficial properties of the porous polyethylene membrane cannot be realized, therefore, the upper limit of the cap is about 50 micrometers. In some embodiments, the cap layer of the hydrophilic copolymer can be up to 40 micrometers or up to 30 micrometers or up to 20 micrometers or up to 15 micrometers thick on the first surface of the polyethylene membrane. In some embodiments, the cap layer of the hydrophilic polymer can be up to about 10 micrometers thick on the first surface of the polyethylene membrane. In other embodiments, the cap layer on the first side of the polyethylene membrane is less than or equal to 10 micrometers thick, or less than or equal to 8 micrometers or less than or equal to 6 micrometers or less than or equal to 4 micrometers or less than or equal to 2 micrometers. In still further embodiments, no cap layer of the hydrophilic polymer is present on the first surface of the polyethylene membrane. The second side of the polyethylene membrane can be essentially free from any of the hydrophilic polymer on the surface, for example, no hydrophilic polymer of a thickness more than 1 micrometer above the surface of the polyethylene membrane. In some embodiments, less than the entire thickness of the porous polyethylene membrane is filled with the hydrophilic polymer, for example, less than or equal to 90% of the thickness of the polyethylene membrane may be filled with the hydrophilic polymer, with the proviso that enough hydrophilic polymer is imbibed so as to provide the porous polyethylene film with a Gurley number of greater than or equal to 1000 seconds. In other embodiments, essentially the entire thickness of the porous polyethylene membrane is filled with the hydrophilic polymer. As used herein, the phrase "essentially the entire thickness" means that at least 90% of the thickness of the porous polyethylene membrane is filled with the hydrophilic polymer. In other embodiments, a hydrophilic polymer can be applied to the second side of the polyethylene membrane as well as the first side. The hydrophilic polymer applied to the second side may be the same or different from the hydrophilic polymer applied to the first side. In still further embodiments, the film can be a composite film wherein a hydrophilic polymer is applied to a first side of a first porous polyethylene membrane with a sufficient amount of the hydrophilic polymer applied to the first side of the porous polyethylene membrane so as to form a cap layer and a second porous polyethylene membrane that may be the same or different as the first porous polyethylene membrane, is thereafter bonded to the laminate via the cap layer of the hydrophilic polymer. This can result in a 3-layer structure having 2 porous polyethylene membranes adhered to one another with the hydrophilic polymer as the layer in between the two porous polyethylene membranes. If desired, an additional layer or layers of hydrophilic polymer may be applied to one or both of the exterior sides of the composite film.

In some embodiments, the hydrophilic polymer may be applied to the porous polyethylene membrane in a continuous manner, so that essentially 100 percent of the surface area of the porous polyethylene membrane comprises the hydrophilic polymer. As used in this context, the term "continuous" means that the full width or nearly the full width of the porous polyethylene membrane is coated with the hydrophilic polymer. It should be noted that in many coating processes, the edges of a roll of material may not be coated due to frames or dams at the edges not allowing the entire width of the membrane to be coated. In other embodiments, the hydrophilic polymer may be applied to the porous polyethylene membrane in a discontinuous manner. As used in this context, the term "discontinuous" means that less than 100 percent of the surface area of the porous polyethylene membrane is coated with the hydrophilic polymer and that portions of the non-edge areas of the porous polyethylene membrane do not contain the hydrophilic polymer. For example, a hydrophilic polymer applied to the porous polyethylene membrane as a series of dots or as a grid of orthogonal lines are to be considered as discontinuous coatings. The area percent of the porous polyethylene membrane that is filled with the hydrophilic polymer can be in the range of from greater than or equal to 20 percent to 100 percent or from 30 percent to less than 100 percent or from 40 percent to less than 100 percent or from 50 percent to less than 100 percent or from 60 to less than 100 percent or from 70 to less than 100 percent or from 80 to less than 100 percent or from 90 to less than 100 percent. In other embodiments, the application of the hydrophilic polymer can be done in a manner that produces a random or non-random pattern of dots, polygons, parallel lines, intersecting lines, straight lines, curved lines or any combination thereof in order to provide the desired percent by area coverage. If oleophobicity is desired in such films, it may be desirable in certain embodiments to include an oleophobic coating, as described otherwise herein.

As a weight ratio, the film can have a ratio of the weight of the hydrophilic polymer to the weight of the porous polyethylene membrane in the range of from 30.0 to 0.5. In other embodiments, the weight ratio of the hydrophilic polymer to the polyethylene membrane can be 20.0, 15.0, 10.0, 9.0, 8.0, 7.0, 6.0, 5.0, 4.0, 3.0, 2.0, 1.0, 0.9, 0.8, 0.7, 0.6, 0.5 or any weight ratio in between those numbers.

Suitable hydrophilic polymers can include, for example, polyurethane, polyamide, polyester, ionomer, or a copolymer or a combination thereof. In other embodiments, nearly any suitable hydrophilic polymer could be used provided that the hydrophilic polymer is capable of having a moisture vapor transmission rate of greater than or equal to 5,000 grams/meter²/day or greater than or equal to 10,000 grams/meter²/day. The hydrophilic polymer can be a thermoplastic or a crosslinkable polymer. In some embodiments, the hydrophilic polymer is a polyurethane and in further embodiments, the polyurethane is a crosslinked polyurethane. Suitable polyurethane polymers can be, for example, polyesterurethanes, polyetherurethanes or polyether-polyesterurethanes.

In some embodiments where coloring is desired, the color can be add using, for example, a pigmented hydrophilic polymer wherein pigments or dyes have been added to the hydrophilic polymer, resulting in a film having the desired color. In other embodiments, the porous polyethylene film can be colored during the formation of the porous polyethylene membrane according to known methods, for example, master-batching. Therefore, one or both of the porous polyethylene membrane and the hydrophilic membrane can be colored or uncolored. If both the porous polyethylene and the hydrophilic polymer are colored, they can be colored in the same or a similar shade or the colors can be chosen independently of one another. Any of the known pigments or dyes can be used, including organic pigments and dyes, inorganic pigments or dyes, metals, metal oxides, carbon black, titanium dioxide or combinations thereof.

In still further embodiments, the porous polyethylene membrane can be treated with both oleophobic and hydrophilic polymers. For example, in a first step, a first side of the porous polyethylene membrane can be treated with an oleophobic polymer that can coat the walls that define the pores of the porous polyethylene membrane without filling the pores, wherein the oleophobic polymer is provided so that less than the entire thickness of the porous polyethylene membrane is treated with the oleophobic polymer. After an optional drying and curing step for the oleophobic polymer, the second side of the porous polyethylene membrane can be treated with a hydrophilic polymer to fill at least a portion of the remaining thickness of the porous polyethylene membrane, followed by an optional heating and curing step for the hydrophilic polymer and the oleophobic polymer. In these embodiments, the hydrophilic polymer fills only that portion of the porous polyethylene membrane that does not have an oleophobic treatment due to the inability of the hydrophilic polymer to wet the oleophobically treated portion of the porous polyethylene membrane.

In some embodiments, the porous polyethylene membrane may be treated with the oleophobic polymer through greater than or equal to 5 percent of the thickness of the porous polyethylene membrane. In other embodiments, the porous polyethylene membrane may be comprise an oleophobic treatment through less than or equal to 95 percent of its thickness. In still further embodiments, the oleophobic treatment may be present in the range of from 10 to 90 percent of the thickness of the porous polyethylene membrane or from 10 to 80 percent, or from 10 to 70 percent or from 10 to 60 percent or from 10 to 50 percent or from 10 to 40 percent or from 10 to 30 percent or from 10 to 20 percent of the thickness of the porous polyethylene membrane. After treatment of the first side of the porous polyethylene membrane, the second side of the porous polyethylene membrane can be treated with the hydrophilic polymer which can fill any of the remaining thickness of the porous polyethylene membrane and in some embodiments, forms a cap layer of the hydrophilic polymer.

The resulting film comprising the porous polyethylene membrane and the hydrophilic polymer can have a moisture vapor transmission rate (MVTR) of greater than or equal to 2500 grams/meter²/day (g/m²/day); a weight of less than 30 grams/meter² and, optionally, a Gurley of greater than or equal to 1000 seconds. In order to be breathable, i.e., moisture vapor is able to be transported from one side of the film to the other without liquid water moving through the film, the MVTR should be greater than or equal to 2500 g/m²/day. In other embodiments, the film can have an MVTR of greater than or equal to 3000 g/m²/day, greater than or equal to 3500 g/m²/day, greater than or equal to 4000 g/m²/day, greater than or equal to 4500 g/m²/day, greater than or equal to 5000 g/m²/day, greater than or equal to 5500 g/m²/day, greater than or equal to 6000 g/m²/day, greater than or equal to 6500 g/m²/day, greater than or equal to 7000 g/m²/day, greater than or equal to 7500 g/m²/day, greater than or equal to 8000 g/m²/day, greater than or equal to 8500 g/m²/day, greater than or equal to 9000 g/m²/day, greater than or equal to 9500 g/m²/day, or greater than or equal to 10,000 g/m²/day.

The film can also have a ratio of matrix tensile strengths in two orthogonal directions in the range of from 0.5 to 2.0. In other embodiments, the ratio of tensile strengths in two orthogonal directions can be in the range of from 0.7 to 1.4. In still further embodiments, the ratio of tensile strengths can be 0.5, 0.6, 0.7, 0.8, 0.9, 1.0, 1.1, 1.2, 1.3, 1.4, 1.5, 1.6, 1.7, 1.8, 1.9, 2.0 or any value in between those two numbers. The difference in tensile strength in the two orthogonal directions relates to differences in the total strain applied in the two directions during the membrane manufacturing process.

The film can also be contamination resistant due to the presence of the hydrophilic polymer filling voids in at least a portion of the membrane thickness, thereby forming a continuous layer free from voids in that portion of the porous polyethylene membrane. Contamination resistant as used herein means that the films do not become contaminated with sweat, sebum or oils thereby reducing the waterproofness over time. If at least a portion of the pores of the porous polyethylene membrane remain unfilled, then an oleophobic coating on the walls of the unfilled pores can provide contamination resistance to the unfilled pores.

The present disclosure also relates to a method for producing the film comprising the porous polyethylene membrane and the hydrophilic polymer, comprising the steps:
1) providing a porous polyethylene membrane having greater than or equal to 30% by weight of the porous polyethylene has a weight average molecular weight greater than 0.5×10⁶ g/mol, wherein the percentage by weight is based on the total weight of the porous polyethylene, a porosity of at least 40% and a Gurley number of less than 200 seconds;
2) coating at least a portion of the porous polyethylene membrane with a hydrophilic polymer; and
3) optionally, crosslinking the hydrophilic polymer.

In another embodiments, the film can be produced according to the steps:
1) providing a porous polyethylene membrane having greater than or equal to 30% by weight of the porous polyethylene has a weight average molecular weight greater than 0.5×10⁶ g/mol, wherein the percentage by weight is based on the total weight of the porous polyethylene, a porosity of at least 40% and a Gurley number of less than 200 seconds;
2) coating a first side of the porous polyethylene membrane with an oleophobic polymer to coat the walls that define the pores of the porous polyethylene membrane;
3) coating a second side of the porous polyethylene membrane with a hydrophilic polymer to form the film; and
4) optionally, crosslinking the hydrophilic polymer.

The film can also be contamination resistant due to the presence of the hydrophilic polymer filling voids in at least a portion of the membrane thickness, thereby forming a continuous layer free from voids in that portion of the porous polyethylene membrane. Contamination resistant as used herein means that the films do not become contaminated with sweat, sebum or oils thereby reducing the waterproofness over time. If at least a portion of the pores of the porous polyethylene membrane remain unfilled, then an oleophobic coating on the walls of the unfilled pores can provide contamination resistance to the unfilled pores.

The present disclosure also relates to an article comprising the film. One advantage of the article of the present disclosure is that the article is wash durable. As used herein, the term "wash durable" means that a laminate comprising the disclosed film can be washed according to the Wash Durability Testing procedure disclosed herein for at least 15 hours and the laminate will be waterproof as determined according to the Suter test described herein. In other embodiments, the laminates remain wash durable after washing for at least 50 hours, or at least 100 hours. In some embodiments, the laminate did not develop leaks after over 200 hours of wash testing. The article can also be waterproof and breathable.

In some embodiments, the article can be produced according to the steps:
1) providing a porous polyethylene membrane having greater than or equal to 30% by weight of the porous polyethylene has a weight average molecular weight greater than 0.5×10⁶ g/mol, wherein the percentage by weight is based on the total weight of the porous polyethylene, a porosity of at least 40% and a Gurley number of less than 200 seconds;
2) coating at least a portion of the porous polyethylene membrane with a hydrophilic polymer;
3) laminating the film to at least one other layer; and
4) optionally, crosslinking the hydrophilic polymer.

In other embodiments, the article can be produced according to the steps:
1) providing a porous polyethylene membrane having greater than or equal to 30% by weight of the porous polyethylene has a weight average molecular weight greater than 0.5×10⁶ g/mol, wherein the percentage by weight is based on the total weight of the porous polyethylene, a porosity of at least 40% and a Gurley number of less than 200 seconds;
2) laminating at least one other layer to a first side of the porous polyethylene membrane;
3) coating at least a portion of the second side of the porous polyethylene membrane with a hydrophilic polymer; and
4) optionally crosslinking the hydrophilic polymer.

The article can be a multilayer laminate, for example, one or more layers of the film and one or more other layers laminated together to form the laminate. The one or more other layers can be a textile layer, a polymer film layer, a natural leather layer, a synthetic leather layer, a fleece layer or a combination thereof. The one or more layers can be a textile layer, a film layer or a combination thereof. In some embodiments, the article can be a 2-layer laminate comprising a textile layer adhered to the first side or the second side of the film. In some embodiments, the article can be a 3-layer laminate comprising a first textile layer adhered to the first side of the film and a second textile layer adhered to the second side of the film. In still further embodiments, additional layers can be applied to produce multilayer laminates having 4, 5, 6 or more layers. Suitable textile layers can include any woven, knit or nonwoven textile. The textiles may be natural and/or synthetic, for example, cotton, wool, silk, jute, polyamide, polyester, acrylic, aramid, viscose, rayon, carbon fiber or a combination thereof. Suitable polymer films can include, for example, polyolefins, polyesters, polyamides, polyurethanes, polyvinyl alcohols, polyvinyl acetates, fluoropolymers, polyvinyl halides, polyvinyl chlorides, epoxy resins, silicon polymers or a combination thereof. Laminates comprising one or more layers of the disclosed film, one or more textile layers and/or one or more polymer film layers can also be produced.

Due to the high strength of the disclosed film, any of the textile or materials listed above and having a relatively low mass can be used to make the laminate. In some embodiments, the laminate can include a relatively low mass textile having a basis weight in the range of from 5 grams/meter² to 30 grams/meter² (gsm). In other embodiments, the textile can have a mass of 6, 7, 8, 9, 10, 11, 12, 13, 14, 15, 16, 17, 18, 19, 20, 21, 22, 23, 24, 25, 26, 27, 28, 29 or 30 gsm or any value in between two of those values. While relatively low mass textiles can be used, textiles having a weight of 30 gsm or greater can also be used. For example, relatively high mass textiles having a mass of as high as 500 gsm could be used.

Lamination techniques are well known in the art and can include, for example, adhesive lamination, heat bonding and stitching. In cases wherein a waterproof laminate is needed, stitch bonding may not be desirable, unless care is taken to ensure that the stitch holes are made impenetrable to liquid water, for example, by sealing the stitch holes using seam tape. In some embodiments, the lamination is accomplished via adhesive lamination wherein an adhesive is applied to one or more of the layers to be joined together and the layers are subsequently placed together, optionally with heat and/or pressure, for example, via a nip roller. The adhesive can be applied to the film layer, the textile layer or to both the film and the textile layer. The adhesive can be applied in a discontinuous manner, for example, a series of adhesive dots, shapes, lines or a combination thereof. In other embodiments, the adhesive can be applied as a continuous layer of adhesive. The adhesive composition can in certain embodiments be a thermoplastic or a crosslinkable adhesive. In still further embodiments, the hydrophilic polymer can be used as the adhesive material for the formation of the laminate. For example, after application of the hydrophilic polymer to one side of the porous polyethylene membrane with the formation of a cap layer of the hydrophilic polymer, a textile can be applied to the hydrophilic polymer and heat and/or pressure can be applied to the laminate in order to insure that the hydrophilic polymer sufficiently contacts and adheres to the textile. If the hydrophilic polymer is used as the adhesive for the laminate, then the curing step for the hydrophilic polymer can be performed after the textile or other material is placed on the side of the film containing the hydrophilic polymer cap layer. In some embodiments, a heat press can be used to provide sufficient pressure to allow the hydrophilic polymer to flow into the spaces between the textile fibers, and the heat from the heat press can perform the desired curing and heat treatment step to create the laminate. In other embodiments, one or more rollers can provide the necessary pressure and/or heat to accomplish the same tasks, for example, in a continuous manner.

Laminates having stretch and recovery properties can be produced according to known methods. For example, the methods taught in US 4443511, US 9950504, US 9126390, US 9233520, US 9238344, WO 2018/67529, all teach methods for imparting stretch in prior membranes and laminate constructions, and these teachings can be adapted to provide stretch into laminates comprising a film(s) of this disclosure.

The articles can be, for example, a garment, an enclosure, a protective enclosure, a tent, a sleeping bag, a bivy bag, a backpack, a pack, a cover and other similar forms benefitting from properties of the films of this disclosure. The garment can be a jacket, a coat, a shirt, pants, a glove, a hat, a shoe, coveralls or at least a portion thereof. Many articles are made from multiple panels that are sewn or otherwise adhered together to form the finished product. Therefore, "at least a portion of" an article means that at least one panel or part of a panel comprises the disclosed film. The articles and garments can be produced so that the film is on the outside of the garment, on the inside of the garment or wherein the film is at least one of the middle layers of the garment, for example, the middle layer of a 3-layer laminate. One advantage to articles and garments comprising the disclosed film is their wash durability. Another advantage of the garments is that the garments can be waterproof and breathable.

For those embodiments where the film is on the outside of the garment, meaning that it is the outermost portion of the garment, the film can be colored, uncolored, the film can be texturized, the film can be embossed or any combination thereof to produce the desired appearance. Methods of coloring the film have been described herein. In order to emboss the film, the film can be selectively compressed in a random manner or in a non-random manner, for example, a pattern, letters, words, pictures, a sports team logo, a business logo or a combination thereof could be embossed into the membrane or the film either prior to treatment with the hydrophilic polymer or after treatment with the hydrophilic polymer, or both. Selectively compressing can result in differing areas of translucency of the film, which can also alter the breathability of the film, with the embossed areas having relatively lower breathability than the non-embossed areas. Suitable methods of embossing can be found in US20080143012.

For those embodiments wherein the film is on the outside of the garment, meaning that it is the outermost portion of the garment, at least a portion of the film can be texturized. The film can be texturized by treating the film with a random or a non-random pattern of an abrasion-resistant polymer. The abrasion-resistant polymer can be applied as a series of dots, lines or other shapes in order to provide the desired appearance as well as providing improved abrasion-resistance to the outermost portion of the garment. Suitable abrasion-resistant polymers and methods for applying them can be found in US 2010/0071115. Another method for texturizing the film can include the application of flock to at least a portion of the film. Suitable methods of applying flock material can be found in WO 99/39038.

It has also been found that the film and articles, for example, laminates comprising the film can be provided with an essentially permanent crease without the need for additional chemistries that are currently in use today. This can be useful, especially in garments comprising the film and at least one textile layer, for example, pants. It has been found that a laminate comprising the film and a textile that has been placed in an embroidery hoop and heated followed by cooling, when removed from the embroidery hoop exhibited a crease at the portion of the laminate where the laminate was secured in the embroidery hoop. The heating temperature should be greater than or equal to 125°C, or greater than or equal to 130°C and less than or equal to 180°C. In embodiments wherein a crease is desired, for example, in a garment, the crease can be produced by folding the article and pressing with heat.

### Examples

### Test Methods

### Molecular Weight

Molecular weight determinations were performed according to the procedures given by Mead, D. W., Determination of Molecular Weight Distributions of Linear Flexible Polymers from Linear Viscoelastic Material Functions, Journal of Rheology 1994, 38(6): 1797-1827.

### Porosity

Porosity was expressed in percent porosity and was determined by subtracting the quotient of the average density of the porous polyethylene membrane and that of the true density of the polymer from 1, then multiplying that value by 100. For the purposes of this calculation, the true density of polyethylene was taken to be 0.94 grams/cubic centimeter. The density of a sample was calculated by dividing the mass/area of a sample by its thickness.

### Moisture Vapor Transmission Rate Test Protocol (MVTR)

MVTR is measured according to DIN EN ISO 15496 (2004). As this is a standard test used in the textile industry, reference is made to the detailed description of the MVTR test disclosed in DIN EN ISO 15496 (2004). For a description of the MVTR test, see also WO 90/04175 A1.

The basic principles are summarized as follows. The sample to be tested together with a highly water vapor permeable, but waterproof microporous membrane is inserted in an annular sample support. Then, the support is immersed in water for 15 minutes (deionized water at 23°C) such that the membrane contacts the water. A cup is filled with a saturated solution of potassium acetate in water such as to produce a relative humidity of 23% at the surface of the sample and is covered with a second piece of the same waterproof microporous membrane. The cup including the potassium acetate solution and the second membrane is weighed and then placed on top of the sample support such that the second membrane contacts the sample. This leads to a transfer of water vapor through the sample from the side of the water into the cup with the potassium acetate. After 15 minutes, the cup with the potassium acetate is removed and its weight is determined. The same procedure is carried out with the first and second membranes, but without the sample, in order to determine moisture vapor permeability of the test setup without the sample. Then, the MVTR of the sample can be determined from the difference of both measurements, also considering the influence of the two additional microporous membranes.

The moisture vapor transmission rate (MVTR) of the laminate according to the invention was measured in accordance with EN ISO 15496 (2004) and is expressed in g/m²/24hr. In order to be considered as water vapor permeable as used herein, the laminate should generally have a water vapor permeability of at least 3000 g/m²/24hr, preferably at least 8000 g/m²/24hr and more preferably at least 12000 g/m²/24hr. MVTR values may be as high as 20000 g/m²/24hr.

### Gurley

The Gurley air flow test measures the time in seconds for 100 cm³ of air to flow through a 6.45 cm² sample at 12.4 cm of water pressure. The samples were measured in a Gurley Densometer Model 4110 Automatic Densometer equipped with a Gurley Model 4320 automated digital timer. The reported results are the average of multiple measurements.

### Matrix Tensile Strength (MTS)

To determine MTS, a sample membrane was cut in the longitudinal and transverse directions using an ASTM D412-Dogbone Die Type F (DD412F). Tensile break load was measured using an INSTRON^{®} 5500R (Illinois Tool Works Inc., Norwood, MA) tensile test machine equipped with flat-faced grips and a "200 Ib" (~90.72 kg) load cell. The gauge length for the grips was set to 8.26 cm and a strain rate of 0.847 cm/s or 14.3 %/s was used. After placing the sample in the grips, the sample was retracted 1.27 cm to obtain a baseline followed by a tensile test at the aforementioned strain rate. Two samples for each condition were tested individually and the average of the maximum load (i.e., the peak force) measurements was used for the MTS calculation. The longitudinal and transverse MTS were calculated using the following equation: MTS = (maximum load/cross-sectional area)*(polymer true density/density of the membrane).

### Wash Testing

A Kenmore Series 80 washing machine was modified so that the timer could be set to allow the machine to run for a designated time. Wash durability was performed by washing samples of the laminates without any laundry detergent in the modified Kenmore washing machine set to a large load, cold water and set on the heavy duty cycle for the desired lengths of time. Once the sample has been washed for the desired length of time, it is removed from the washer and dried at ambient conditions.

### Suter Testing

The Suter Test Method was used to determine if a sample was liquid-proof. This procedure is based generally on the description in ASTM D 751-00, Standard Test Methods for Coated Fabrics (Hydrostatic Resistance Procedure B2).

The test sample was clamped and sealed between rubber gaskets in a fixture that held the sample so that water could be applied to a specific area. The circular area to which water was applied was approximately 10.8 centimeters (4.25 inches) in diameter. The water was applied at a pressure of 0.07 bar (1 psig) to one side of the sample. In testing laminates with one textile layer the pressurized water was incident upon the film side.

The unpressurized side of the sample was observed visually for any sign of water appearing for 3 minutes. If no water was observed the sample was deemed to have passed the test and was considered liquid-proof. The reported values were the average of three measurements.

### Example 1

A polyethylene membrane consisting of polyethylene with a weight average molecular weight of 3,150,000 grams/mole (g/mol), greater than 30% by weight of the porous polyethylene membrane having a weight average molecular weight of greater than 500,000 g/mol, porosity of 64.9% and Gurley time of 68.0 seconds was laminated to a polyester fabric using a non-water permeable polyurethane adhesive that was applied in a discrete dot pattern using a gravure coating roll such that the polyurethane adhesive covered approximately 35% of the membrane surface area. The polyurethane adhesive was allowed to cure.

The membrane in this 2-layer (2L) laminate was gravure coated with 17 gsm of hydrophilic polyurethane pre-polymer mixture containing a thermally activated curing agent andwas sent through an infrared oven for approximately 20 seconds to activate the curing agent and crosslink the polyurethane. The film was then wound into a roll. The polyurethane coated 2L laminate was allowed to cool to room temperature to cure.

A sample of this 2L laminate was then tested for durability in the wash. In the first test, a sample of the 2L laminate was placed in a home washing machine with only water. The washing machine was turned on and left to run continuously for 24 hours. The sample was then taken out and hung on a rack to dry for 24 hours. The sample was then tested in three separate 4 inch diameter circular areas for water leaks by applying 1 psi of water pressure to one side of the laminate for 3 minutes. No water leaks were seen in any of the three areas of the sample. The 2L laminate was returned to the wash and the test repeated until a total of 216 hours of time in the wash had been completed. No water leaks were seen in any of the three circular areas when applying 1 psi of water pressure for 3 min. In the second test, a sample of the 2L laminate was washed in a home laundry machine and then dried in a home dryer. This process was repeated for a total for 5 complete wash and dry cycles. The sample was then tested for leaks in three separate 4 inch diameter circular areas by applying 1 psi of water pressure to one side for 3 minutes. No water leaks were seen in any of the three circular areas. The samples were returned to the wash and the test was repeated for another 10 wash and dry cycles. No water leaks were seen in any of the three circular areas on the sample after applying 1 psi of water pressure for 3 min.

### Comparative Example A

A 30 micron thick polyethylene membrane wherein the polyethylene weight average molecular weight was 769,000 g/mol (available from Gelon LIB Co., Ltd in China) was stretched in the machine direction (MD) 2.25:1 and then stretched in the transverse direction (TD) 9:1. The resulting PE membrane had a mass per unit area of 2.1 grams/meter² (gsm), a thickness of 10 microns, a Gurley time of 7.5 seconds and a porosity of 78%. This stretched membrane was then laminated to a polyester fabric (available from Nanya, article # J47P) using a non-water permeable polyurethane adhesive that was applied in a discrete dot pattern using a gravure coating roll. The polyurethane adhesive covered approximately 35% of the membrane surface area. This 2-layer (2L) laminate was then allowed to cure in roll form for two days.

The membrane in this 2L laminate was then gravure coated with 17 gsm of a hydrophilic polyurethane pre-polymer mixture containing a thermally activated curing agent. The polyurethane coated laminate was then sent through an infrared oven for approximately 20 seconds to activate the curing agent and crosslink the polyurethane to produce a tack-free surface. The film was then wound into a roll. The roll of polyurethane coated laminate was left to fully cure in roll form for two days.

A sample of this 2L laminate was then tested for durability in the wash. In the first test, a sample of the 2L laminate was placed in a home washing machine with only water. The washing machine was turned on and left to run continuously for 24 hours. The sample was then taken out and hung on a rack to dry for 24 hours. The sample was then tested in three separate 4 inch diameter circular areas for water leaks by applying 1 psi of water pressure to one side of the laminate for 3 minutes. Water leaks were seen in all three areas of the sample. In the second test, a sample of the 2L laminate was washed and dried according to the procedure described above. This process was repeated for a total for 5 complete wash and dry cycles. The sample was then tested for leaks in three separate 4 inch diameter circular areas by applying 1 psi of water pressure to one side for 3 minutes. Water leaks were seen in two of the three circular areas.

### EXAMPLE 2

Polyethylene resin with weight average molecular weight of about 7,000,000 grams/mole was obtained from Mitsui Chemicals, Inc., made in accordance with WO 2012/053261, was made into a membrane according to the process described in US 9,926,416. The resulting membrane had a mass of 2.4 grams/m² and porosity of 62.5%. A composite film was made by coating the membrane with 5.1 grams/m² of hydrophilic polyurethane pre-polymer mixture containing a thermally activated curing agent and then heating the film in infrared oven set to a temperature of 130°C to activate the curing agent and crosslink the polyurethane. The film was then laminated to a polyester fabric using a non-water permeable polyurethane adhesive to form a 2-layer (2L) laminate. The non-water permeable polyurethane adhesive was applied in a discrete dot pattern using a gravure coating roll such that the polyurethane adhesive covered approximately 35% of the membrane surface area.

A sample of this 2L laminate was then tested according to the wash durability test. The washing machine was turned on and left to run continuously for 68.5 hours. The sample was then taken out and hung on a rack to dry for 24 hours. The sample was then tested in five separate 4 inch diameter circular areas for water leaks using the Suter test. Water leaks were not seen in any of the five circular areas. The laminate was returned to the washing machine and the washing machine was run continuously for 54.75 hours. The laminate was leak tested again and no leaks were observed in any of the five circular areas. The laminate was returned to the washing machine and the washing machine was run continuously for 113.5 hours. The laminate was leak tested again and no leaks were observed in any of the five circular areas. The total time in the wash test was 236.75 hours.

### Comparative B

A Columbia Omni-Dry Peak 2 Peak Waterproof jacket (Columbia Sportswear Company) was purchased. The garment was a 3L laminate and contained an outer and inner textile that were both laminated to a polyethylene membrane. The back section of this jacket was cut out and the laminate was tested for wash durability, running the washer continuously for 15.25 hours. Three separate 4 inch diameter circular areas of the laminate were tested according to the Suter test. These circular areas did not contain any seams. Multiple water leaks were seen in all three circular areas.

## Claims

1. A film comprising:
A) a porous polyethylene membrane comprising:
a) greater than or equal to 30% by weight of the porous polyethylene has a weight average molecular weight greater than 0.5×10⁶ g/mol, when measured according to the Molecular Weight test method described herein, wherein the percentage by weight is based on the total weight of the porous polyethylene;
b) a porosity of at least 40%, when measured according to the porosity test method described herein;
c) a Gurley number of less than 200 seconds measured according to the Gurley test method described herein; and
B) a hydrophilic polymer filing at least a portion of the pores of the porous polyethylene;
wherein the film comprises :
i) an MVTR of greater than or equal to 2500 g/m²/day, when measured according to the Moisture Vapor Transmission Rate Test Protocol described herein;
ii) a weight of less than 30 grams/meter²; optionally
iii) Gurley of greater than or equal to 1000 seconds, when measured according to the Gurley test method described herein.

2. The film of claim 1 wherein the ratio of matrix tensile strengths of the film in two orthogonal directions is in the range 0.5 to 2.0, when measured according to the Matrix Tensile Strength test method described herein.

3. The film of claim 1 or 2 wherein substantially all of the pores in the porous polyethylene membrane are filled with the hydrophilic polymer.

4. The film of any one of claims 1 to 3 wherein the hydrophilic polymer is a polyurethane, polyamide, polyester, ionomer, or a copolymer or a copolymer or a combination thereof.

5. The film of any one of claims 1 to 4 wherein the porous polyethylene membrane comprises a weight of less than 10 grams/meter².

6. The film of any one of claim 1 to 5 wherein the porous polyethylene membrane comprises a porosity of at least 60%, when measured according to the porosity test method described herein.

7. The film of any one of claims 1 to 6 wherein the porous polyethylene membrane comprises a Gurley number that is less than or equal to 60 seconds, when measured according to the Gurley test method described herein.

8. The film of any one of claims 1 to 7 wherein the ratio of matrix tensile strengths of the film in two orthogonal directions is in the range 0.7 to 1.4, when measured according to the Matrix Tensile Strength test method described herein.

9. The film of any one of claims 1 to 8 wherein the polyethylene membrane has a first side and a second side and the hydrophilic polymer is applied to the first side of the polyethylene membrane resulting in filling at least a portion of the pores and a cap of hydrophilic polymer on the first side of the polyethylene membrane.

10. The film of any one of claims 1 to 9 wherein the weight ratio of hydrophilic polymer to porous polyethylene is in the range of from 30 to 0.5.

11. An article comprising the film of any one of claims 1 to 10.

12. The article of claim 11 wherein the article is a multilayer laminate comprising at least one other layer that is laminated to the film.

13. The article of any one of claims 11 or 12 wherein the at least one other layer is a textile layer, a polymer film layer, a natural leather layer, a synthetic leather layer, a fleece layer or a combination thereof.

14. The article of any one of claims 11 to 13 wherein the at least one other layer is a textile layer.

15. The article of any one of claims 11 to 14 wherein the layers of the laminate are adhered to one another using a continuous or a discontinuous adhesive.

16. The article of claim15 wherein the adhesive is a thermoplastic or a crosslinkable adhesive.

17. The article of any one of claims 11 to 16 wherein the article is a garment.

18. The article of claim 17 wherein the garment is a jacket, a coat, a shirt, pants, a glove, a hat, a shoe, coveralls or at least a portion thereof.

19. The article of any one of claims 17 or 18 wherein the film is on the exterior of the garment or the film is not on the exterior of the garment.

20. The article of any one of claims 17 to 19 wherein the garment is waterproof.

## Patentansprüche

1. Film, umfassend:
A) eine poröse Polyethylenmembran, umfassend:
a) mehr als oder gleich 30 Gew.-% des porösen Polyethylens weisen ein gewichtsmittleres Molekulargewicht von mehr als 0,5×10⁶ g/mol auf, wenn gemäß dem hierin beschriebenen Testverfahren für das Molekulargewicht gemessen wird, wobei der Gewichtsprozentsatz auf dem Gesamtgewicht des porösen Polyethylens basiert;
b) eine Porosität von mindestens 40 %, wenn gemäß dem hierin beschriebenen Testverfahren für die Porosität gemessen wird;
c) eine Gurley-Zahl von weniger als 200 Sekunden, gemessen gemäß dem hierin beschriebenen Gurley-Testverfahren; und
B) ein hydrophiles Polymer, das mindestens einen Abschnitt der Poren des porösen Polyethylens ausfüllt;
wobei der Film Folgendes umfasst:
i) eine MVTR von mehr als oder gleich 2500 g/m²/Tag, wenn gemäß dem hierin beschriebenen Testprotokoll für die Wasserdampfdurchlässigkeitsrate gemessen wird,
ii) ein Gewicht von weniger als 30 Gramm/Meter²; optional
iii) Gurley von mehr als oder gleich 1000 Sekunden, wenn gemäß dem hierin beschriebenen Gurley-Testverfahren gemessen wird.

2. Film nach Anspruch 1, wobei das Verhältnis von Matrixzugfestigkeiten des Films in zwei orthogonalen Richtungen in dem Bereich 0,5 bis 2,0 liegt, wenn gemäß dem hierin beschriebenen Testverfahren für die Matrixzugfestigkeit gemessen wird.

3. Film nach Anspruch 1 oder 2, wobei im Wesentlichen alle Poren in der porösen Polyethylenmembran mit dem hydrophilen Polymer ausgefüllt sind.

4. Film nach einem der Ansprüche 1 bis 3, wobei das hydrophile Polymer ein Polyurethan, Polyamid, Polyester, Ionomer oder ein Copolymer oder ein Copolymer oder eine Kombination davon ist.

5. Film nach einem der Ansprüche 1 bis 4, wobei die poröse Polyethylenmembran ein Gewicht von weniger als 10 Gramm/Meter² umfasst.

6. Film nach einem der Ansprüche 1 bis 5, wobei die poröse Polyethylenmembran eine Porosität von mindestens 60 % umfasst, wenn gemäß dem hierin beschriebenen Testverfahren für die Porosität gemessen wird.

7. Film nach einem der Ansprüche 1 bis 6, wobei die poröse Polyethylenmembran eine Gurley-Zahl umfasst, die weniger als oder gleich 60 Sekunden beträgt, wenn gemäß dem hierin beschriebenen Gurley-Testverfahren gemessen wird.

8. Film nach einem der Ansprüche 1 bis 7, wobei das Verhältnis von Matrixzugfestigkeiten des Films in zwei orthogonalen Richtungen in dem Bereich 0,7 bis 1,4 liegt, wenn gemäß dem hierin beschriebenen Testverfahren für die Matrixzugfestigkeit gemessen wird.

9. Film nach einem der Ansprüche 1 bis 8, wobei die Polyethylenmembran eine erste Seite und eine zweite Seite aufweist und das hydrophile Polymer auf die erste Seite der Polyethylenmembran aufgebracht wird, was zum Füllen mindestens eines Abschnitts der Poren und einer Kappe aus hydrophilem Polymer auf der ersten Seite der Polyethylenmembran führt.

10. Film nach einem der Ansprüche 1 bis 9, wobei das Gewichtsverhältnis von hydrophilem Polymer zu porösem Polyethylen in dem Bereich von 30 bis 0,5 liegt.

11. Artikel, umfassend den Film nach einem der Ansprüche 1 bis 10.

12. Artikel nach Anspruch 11, wobei der Artikel ein Mehrschichtlaminat ist, das mindestens eine andere Schicht umfasst, die auf den Film laminiert ist.

13. Artikel nach einem der Ansprüche 11 oder 12, wobei die mindestens eine andere Schicht eine Textilschicht, eine Polymerfilmschicht, eine Naturlederschicht, eine Kunstlederschicht, eine Vliesschicht oder eine Kombination davon ist.

14. Artikel nach einem der Ansprüche 11 bis 13, wobei die mindestens eine andere Schicht eine Textilschicht ist.

15. Artikel nach einem der Ansprüche 11 bis 14, wobei die Schichten des Laminats unter Verwendung eines kontinuierlichen oder diskontinuierlichen Klebstoffs aneinandergeklebt sind.

16. Artikel nach Anspruch 15, wobei der Klebstoff ein thermoplastischer oder ein vernetzbarer Klebstoff ist.

17. Artikel nach einem der Ansprüche 11 bis 16, wobei der Artikel ein Kleidungsstück ist.

18. Artikel nach Anspruch 17, wobei das Kleidungsstück eine Jacke, ein Mantel, ein Hemd, eine Hose, ein Handschuh, ein Hut, ein Schuh, ein Overall oder mindestens ein Abschnitt davon ist.

19. Artikel nach einem der Ansprüche 17 oder 18, wobei sich der Film auf der Außenseite des Kleidungsstücks befindet oder sich der Film nicht auf der Außenseite des Kleidungsstücks befindet.

20. Artikel nach einem der Ansprüche 17 bis 19, wobei das Kleidungsstück wasserdicht ist.

## Revendications

1. Film comprenant :
A) une membrane de polyéthylène poreux comprenant :
a) une quantité supérieure ou égale à 30 % en poids du polyéthylène poreux a un poids moléculaire moyen en poids supérieur à 0,5 × 10⁶ g/mol, lorsqu'il est mesuré selon la méthode d'essai du poids moléculaire décrite ici, le pourcentage en poids étant basé sur le poids total du polyéthylène poreux ;
b) une porosité d'au moins 40 %, mesurée selon la méthode d'essai de porosité décrite ici ;
c) une valeur Gurley inférieure à 200 secondes mesurée selon la méthode d'essai Gurley décrite dans le présent document ; et
B) un polymère hydrophile remplissant au moins une partie des pores du polyéthylène poreux ;
dans lequel le film comprend :
i) un MVTR supérieur ou égal à 2500 g/m²/jour, mesuré conformément au protocole d'essai du coefficient de transmission de vapeur d'eau décrit dans le présent document ;
ii) un poids inférieur à 30 grammes/mètre² ; éventuellement
iii) une valeur Gurley supérieure ou égal à 1000 secondes, lorsqu'elle est mesurée conformément à la méthode d'essai Gurley décrite ici.

2. Film selon la revendication 1, dans lequel le rapport des résistances à la traction de la matrice du film dans deux directions orthogonales est compris dans la plage entre 0,5 et 2,0, lorsqu'il est mesuré selon la méthode d'essai de résistance à la traction de la matrice décrite ici.

3. Film selon la revendication 1 ou 2, dans lequel pratiquement tous les pores de la membrane en polyéthylène poreux sont remplis du polymère hydrophile.

4. Film selon l'une quelconque des revendications 1 à 3, dans lequel le polymère hydrophile est un polyuréthane, un polyamide, un polyester, un ionomère ou un copolymère ou un copolymère ou une combinaison de ceux-ci.

5. Film selon l'une quelconque des revendications 1 à 4, dans lequel la membrane en polyéthylène poreux comprend un poids inférieur à 10 grammes/mètre².

6. Film selon l'une quelconque des revendications 1 à 5, dans lequel la membrane en polyéthylène poreux comprend une porosité d'au moins 60 %, lorsqu'elle est mesurée selon la méthode d'essai de porosité décrite ici.

7. Film selon l'une quelconque des revendications 1 à 6, dans lequel la membrane en polyéthylène poreux comprend une valeur Gurley qui est inférieure ou égale à 60 secondes, lorsqu'elle est mesurée selon la méthode d'essai Gurley décrite ici.

8. Film selon l'une quelconque des revendications 1 à 7, dans lequel le rapport des résistances à la traction de la matrice du film dans deux directions orthogonales est compris dans la plage entre 0,7 et 1,4, lorsqu'il est mesuré selon la méthode d'essai de résistance à la traction de la matrice décrite ici.

9. Film selon l'une quelconque des revendications 1 à 8, dans lequel la membrane en polyéthylène a un premier côté et un second côté et le polymère hydrophile est appliqué sur le premier côté de la membrane en polyéthylène, ce qui a pour résultat de remplir au moins une partie des pores et un capuchon de polymère hydrophile sur le premier côté de la membrane en polyéthylène.

10. Film selon l'une quelconque des revendications 1 à 9, dans lequel le rapport pondéral du polymère hydrophile au polyéthylène poreux est compris dans la plage entre 30 et 0,5.

11. Article comprenant le film selon l'une quelconque des revendications 1 à 10.

12. Article selon la revendication 11, dans lequel l'article est un stratifié multicouche comprenant au moins une autre couche qui est stratifiée sur le film.

13. Article selon l'une quelconque des revendications 11 ou 12, dans lequel l'au moins une autre couche est une couche textile, une couche de film polymère, une couche de cuir naturel, une couche de cuir synthétique, une couche de polaire ou une combinaison de celles-ci.

14. Article selon l'une quelconque des revendications 11 à 13, dans lequel l'au moins une autre couche est une couche textile.

15. Article selon l'une quelconque des revendications 11 à 14, dans lequel les couches du stratifié sont collées les unes aux autres à l'aide d'un adhésif continu ou discontinu.

16. Article selon la revendication 15, dans lequel l'adhésif est un thermoplastique ou un adhésif réticulable.

17. Article selon l'une quelconque des revendications 11 à 16, dans lequel l'article est un vêtement.

18. Article selon la revendication 17 dans lequel le vêtement est une veste, un manteau, une chemise, un pantalon, un gant, un chapeau, une chaussure, une combinaison ou au moins une partie de ceux-ci.

19. Article selon l'une quelconque des revendications 17 ou 18, dans lequel le film se trouve sur l'extérieur du vêtement ou le film ne se trouve pas sur l'extérieur du vêtement.

20. Article selon l'une quelconque des revendications 17 à 19, dans lequel le vêtement est imperméable.
